# EUROPÄISCHE PATENTANMELDUNG

(11) **EP 1 978 287 A2**
(43) Veröffentlichungstag der Anmeldung: **08.10.2008**
(21) Anmeldenummer: 08005739.1
(22) Anmeldetag: 27.03.2008
(51) Int. Cl.: F16K 31/53

(54) **Mechanische Stellvorrichtung zum Stellen eines Stellelemnts**

(30) Priorität: 03.04.2007 DE 102007015984
(71) Anmelder: Fischer Automotive Systems GmbH, 72160 Horb a.N. (DE)
(72) Erfinder: Karrer, Friedrich, 72160 Horb (DE); Kaupp, Gundolf, 72160 Horb-Altheim (DE); Thurau, Marco, 72178 Waldachtal-Salzstetten (DE)

(57) **Zusammenfassung**

Die Erfindung betrifft eine mechanische Stellvorrichtung für ein Stellelement, beispielsweise eine Luftklappe (2) in einem Luftkanal (1) einer Belüftung eines Fahrgastraums eines Kraftwagens. Die mechanische Stellvorrichtung weist zwei miteinander kämmende Zahnräder (5, 6) auf, deren eines Zahnrad (6) ein Bedienrad (17) aufweist und deren anderes Zahnrad (5) drehfest mit einer Luftklappe (2) verbunden ist. Durch Überwinden eines Druckpunkts, der durch eine Zahngrunderhöhung (13) bewirkt ist, wird die Luftklappe (2) in einer geschlossenen Stellung gehalten. Die Erfindung sieht ein Versteifungselement (15) beispielsweise in Form einer Speiche vor, die eine Verzahnung (7) eines der Zahnräder (5) in einer Sehnenrichtung abstützt und dadurch eine Vorspannung, mit der die Luftklappe (2) anliegt, erhöht.

## Beschreibung

Die Erfindung betrifft eine mechanische Stellvorrichtung zum Stellen eines Stellelements mit den Merkmalen des Oberbegriffs des Anspruchs 1. Mit Stellen ist ein Bewegen des Stellelements beispielsweise zwischen einer offenen Stellung und einer Schließstellung gemeint. Das Stellelement kann beispielsweise ein Schieber oder eine Klappe beispielsweise zum Durchlass, Drosseln und Sperren eines Fluidstroms sein. Insbesondere ist die erfindungsgemäße Stellvorrichtung zur Steuerung der Belüftung eines Kraftwagens vorgesehen.

Eine derartige mechanische Stellvorrichtung ist bekannt aus dem Gebrauchsmuster DE 20 2006 009 242 U1. Die bekannte Stellvorrichtung ist zur Steuerung eines Luftstroms in einer Belüftungseinrichtung eines Kraftwagens vorgesehen. Sie weist eine schwenkbare Luftklappe als Stellelement auf, die in einem Luftkanal angeordnet ist. Durch Querstellen der Luftklappe im Luftkanal wird der Luftkanal geschlossen, durch Stellen der Luftklappe parallel zum Luftkanal wird der Luftkanal geöffnet. In einer schrägen Zwischenstellung wird der Luftstrom im Luftkanal gedrosselt.

Zum Stellen der das Stellelement bildenden Luftklappe weist die bekannte Stellvorrichtung ein Zahnradgetriebe auf, wobei die Luftklappe starr mit einem der Zahnräder verbunden ist. Ein anderes Zahnrad weist ein Bedienrad auf, das durch einen Schlitz einer Instrumententafel vorsteht, um es bedienen, d. h. drehen zu können. Der Luftkanal ist an einer Innenseite der Instrumententafel angesetzt bzw. ist Bestandteil eines Instrumententafelbauteils. Durch Drehen, genau genommen Schwenken, des Bedienrads werden die kämmenden Zahnräder und die mit einem der Zahnräder starr verbundene Luftklappe geschwenkt, d. h. die das Stellelement bildende Luftklappe wird gestellt.

Zwei Zahnräder des Zahnradgetriebes der bekannten Stellvorrichtung weisen einen überwindbaren Druckpunkt auf, d. h. es ist ein erhöhtes Moment zum Drehen der Zahnräder beim Überwinden des Druckpunkts notwendig. Der Druckpunkt ist durch eine Erhöhung eines Zahngrunds der Verzahnung eines Zahnrads bewirkt, so dass ein Zahnkopf eines korrespondierenden Zahns eines kämmenden Zahnrads beim Drehen gegen den Zahngrund stößt. Zumindest eine der beiden kämmenden Verzahnungen ist elastisch, so dass der gegen den Zahngrund stoßende Zahnkopf und/oder der Zahngrund ausweichen kann. Der Druckpunkt ist an einer Umfangsstelle des Zahnrads angeordnet, die kurz vor Erreichen der geschlossenen Stellung des Stellelements erreicht wird. Beim Schließen wird der Druckpunkt somit kurz vor dem vollständigen Schließen erreicht und überwunden. Der Druckpunkt bewirkt unmittelbar nach seiner Überwindung ein Moment, das die kämmenden Zahnräder vom Druckpunkt weg beaufschlagt. Ist der Druckpunkt in Schließrichtung überwunden worden, beaufschlagt das vom Druckpunkt bewirkte Moment die Zahnräder und über diese das Stellelement in die geschlossene Stellung. Dadurch wird das als Luftklappe ausgebildete Stellelement der bekannten Stellvorrichtung mit Vorspannung gegen eine im Luftkanal umlaufende, stufenförmige Anlagefläche gedrückt, wodurch der Luftkanal zuverlässig gesperrt ist und auch bleibt. Eine lose Anlage der das Stellelement bildenden Luftklappe an der Anlagefläche einschließlich der Möglichkeit eines Spalts, durch den Luft durchtreten kann, wird vermieden.

Um die Vorspannung, mit der das Stellelement in der geschlossenen Stellung an der Anlagefläche anliegt, aufrechtzuerhalten, weist die bekannte Stellvorrichtung eine Rücklaufsperre mit einer formschlüssigen Verriegelung gegen selbsttätiges Entriegeln auf, die wirksam wird, wenn das Stellelement in die geschlossene Stellung geschwenkt und das Bedienrad noch ein kurzes Stück weitergedreht wird. Die Entriegelung der Rücklaufsperre erfolgt durch Rückdrehen des Bedienrads, also durch Drehen des Bedienrads in einer Öffnungsrichtung.

Aufgabe der vorliegenden Erfindung ist, eine andere Möglichkeit vorzuschlagen, mit der die Vorspannung des Stellelements einer mechanischen Stellvorrichtung in der Schließ- oder auch in einer anderen Endstellung aufrechterhalten wird.

Diese Aufgabe wird erfindungsgemäß durch die Merkmale des Anspruchs 1 gelöst. Die erfindungsgemäße mechanische Stellvorrichtung weist zwei miteinander kämmende Zahnräder zum Stellen, also zum Bewegen, eines Stellelements auf, wobei das Stellelement mit einem der beiden Zahnräder wirkverbunden ist. Ein Stellweg des Stellelements wird in zumindest einer Richtung durch eine Begrenzung, beispielsweise einen mechanischen Anschlag begrenzt. Vorzugsweise allerdings nicht zwingend ist die Begrenzung in einer geschlossenen Stellung des Stellelements wirksam. Der Antrieb erfolgt am oder über das andere Zahnrad.

Die beiden kämmenden Zahnräder weisen einen überwindbaren Druckpunkt auf, der durch Erhöhung der Verzahnung eines oder auch beider Zahnräder bewirkt wird. Die Erhöhung der Verzahnung bzw. der überwindbare Druckpunkt kann durch eine Vergrößerung eines Radius der Verzahnung, einen engeren Abstand zwischen zwei Zähnen, einen erhöhten Zahngrund oder einen erhöhten Zahnkopf bzw. höheren Zahn am Druckpunkt bewirkt sein. Zum Ausgleich der Erhöhung der Verzahnung ist eines der beiden Zahnräder zumindest im Bereich des überwindbaren Druckpunkts in Zahnhöhenrichtung federnd. Bei einem Stirnzahnrad ist die Federrichtung radial. Der überwindbare Druckpunkt ist so angeordnet, dass er unmittelbar vor Erreichen der Begrenzung des Stellelements überwunden wird, so dass das Stellelement mit Vorspannung an der Begrenzung anliegt. Für die Erfindung ist nicht maßgeblich, welche der beiden Verzahnungen federnd ist oder ob beide Verzahnungen federnd sind. Der Druckpunkt muss mit angemessener und angenehmer Bedienkraft überwindbar sein und der Druckpunkt soll die Vorspannung des Stellelements an der Begrenzung bewirken.

Die in Zahnhöhenrichtung federnde Ausbildung der Verzahnung eines oder beider Zahnräder kann eine Torsionssteifigkeit des Zahnrads verringern, d. h. die Verzahnung federt nicht nur wie gewünscht in Zahnhöhenrichtung, sondern weist eine Elastizität in Umfangsrichtung des Zahnrads auf. Die Erfindung sieht eine Versteifung der federnden Verzahnung gegen eine Verschiebung in Umfangsrichtung des Zahnrads vor, wobei die Versteifung im Bereich des Druckpunkts und in der Richtung, in der das Stellelement mit Vorspannung gegen die Begrenzung gedrückt wird, wirksam ist, vor. Eine Steifigkeit der erfindungsgemäßen Stellvorrichtung ist jedenfalls in Bewegungsrichtung zur Begrenzung, und wenn das Stellelement die Begrenzung erreicht, vergrößert. Bei einer vorgegebenen Kraft zum Überwinden des Druckpunkts bzw. einer aufgrund des Druckpunkts ausgeübten Kraft ist die Vorspannung, mit der das Stellelement an der Begrenzung anliegt, vergrößert.

Vorzugsweise weisen die Zahnräder oder zumindest eines der Zahnräder Verzahnungssegmente auf. Die Verzahnungen der Zahnräder erstrecken sich also nicht über den gesamten Umfang, sondern nur über einen Umfangsabschnitt. Auf einem übrigen Umfangsabschnitt kann beispielsweise das dem Antrieb dienende Zahnrad eine Grifffläche aufweisen, die beispielsweise gummiert oder geriffelt sein kann.

Zur federnden Ausbildung der Verzahnung sieht eine Ausgestaltung der Erfindung eine Ausnehmung des Zahnrads unterhalb der Zahnfüße der Verzahnung vor. Die Ausnehmung ist zumindest dort vorgesehen, wo die Verzahnung federn soll, also im Bereich des Druckpunkts. Die Ausnehmung kann beispielsweise ein unterhalb der Zahnfüße sich in Umfangsrichtung erstreckendes Langloch sein. Auch kann das Zahnrad zwischen der Verzahnung und einer Nabe gelocht sein oder die Verzahnung wird von Speichen getragen. Die erfindungsgemäße Versteifung gegen eine Verschiebung der Verzahnung in Umfangsrichtung überbrückt die Ausnehmung des Zahnrads ausgehend vom Bereich des Druckpunkts in einer Sehnenrichtung des Zahnrads. Die Versteifung verläuft also vom Druckpunkt in Sehnenrichtung zu einer Nabe des Zahnrads, und zwar in der Richtung, in der die Vorspannung auf das Stellelement ausgeübt wird. Insbesondere ist die Versteifung ein stangenförmiges Versteifungselement, also beispielsweise eine Art Speiche, die in Sehnenrichtung angeordnet ist. Diese Ausgestaltung ermöglicht ein einstückiges Zahnrad, das kostengünstig beispielsweise durch Spritzgießen aus Kunststoff herstellbar ist.

In bevorzugter Ausgestaltung erstreckt sich die Ausnehmung des Zahnrads in einer Umfangsrichtung, um die gewünschte Federeigenschaft der Verzahnung in Zahnhöhenrichtung zu bewirken.

In bevorzugter Ausgestaltung der Erfindung weist eines der Zahnräder ein Bedienrad auf. Das Bedienrad kann drehfest mit dem Zahnrad sein, es kann auch wie bereits oben erläutert das Zahnrad über einen Teil seines Umfangs als Bedienrad ausgebildet sein.

Insbesondere ist die erfindungsgemäße mechanische Stellvorrichtung für oder als Teil einer Belüftungseinrichtung eines Kraftwagens vorgesehen. Das Stellelement ist eine Luftklappe, die in einem Luftkanal angeordnet ist und diesen in einer geschlossenen Stellung verschließt. Vorzugsweise ist die Luftklappe schwenkbar und starr mit einem der beiden Zahnräder der erfindungsgemäßen Stellvorrichtung verbunden.

Die Erfindung wird nachfolgend anhand eines in der Zeichnung dargestellten Ausführungsbeispiels näher erläutert. Es zeigen:
- Figur 1: einen Luftkanal einer Fahrzeugbelüftung mit einer mechanischen Stellvorrichtung gemäß der Erfindung in perspektivischer, teilweise geschnittener Darstellung;
- Figur 2: die Stellvorrichtung aus Figur 1 in einer Seitenansicht; und
- Figur 3: eine Einzelheit III aus Figur 2.

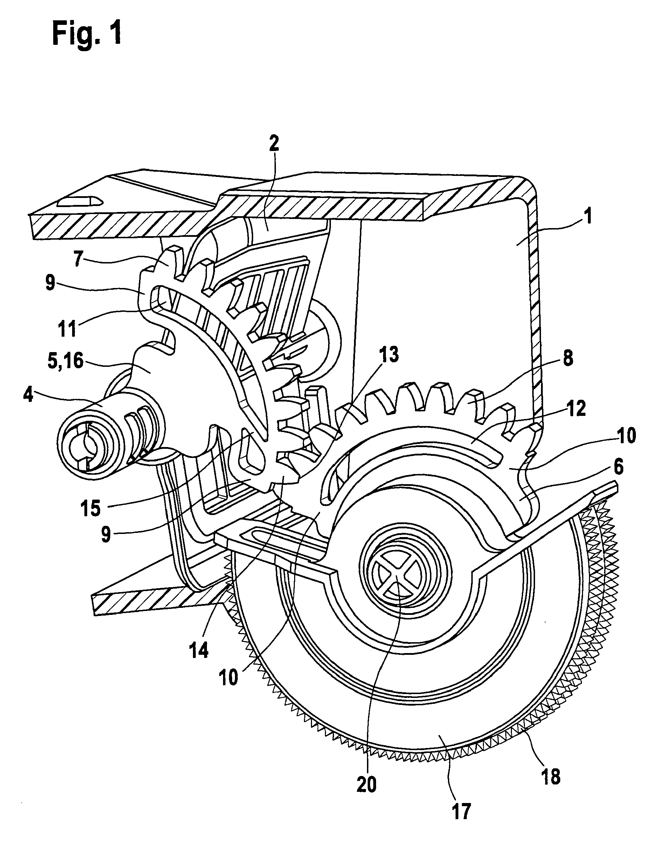

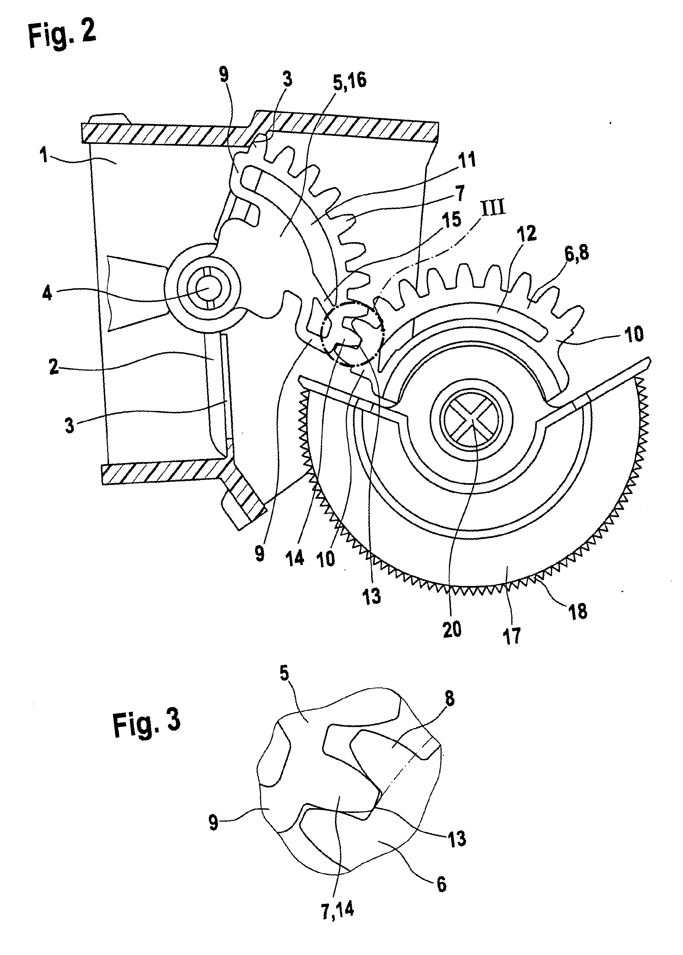

Die Figuren 1 und 2 zeigen einen Luftkanal 1 eines nicht dargestellten Kraftwagens. Durch den Luftkanal 1 gelangt Luft aus einer Heizungs-, Lüftungs- und/oder Klimaanlage in einen Fahrgastraum des Kraftwagens. Der Luftkanal 1 weist einen rechteckigen Querschnitt auf, was allerdings nicht zwingend ist. Im Luftkanal 1 ist eine Luftklappe 2 angeordnet, die um eine den Luftkanal 1 quer durchsetzende Achse schwenkbar gelagert ist. In der Zeichnung ist die Luftklappe 2 quer zum Luftkanal 1 gestellt gezeichnet, d. h. in ihrer Schließstellung, in der sie den Luftkanal 1 verschließt. Die Luftklappe 2 lässt sich um ca. 90° in eine offene Stellung schwenken, in der sie in etwa längs zum Luftkanal 1 ausgerichtet ist. Zwischenstellungen sind möglich, in denen die Luftklappe 2 einen Luftstrom durch den Luftkanal 1 drosselt. Die Luftklappe 2 bildet ein Stellelement einer noch zu erläuternden mechanischen Stellvorrichtung gemäß der Erfindung.

Im Bereich der Luftklappe 2 weist der Luftkanal 1 eine umlaufende Stufe auf, die einen Anschlag 3 für die Luftklappe 2 in deren Schließstellung bildet. Der Anschlag 3 kann auch als Begrenzung für den Stellweg der Luftklappe 2 in der Schließrichtung aufgefasst werden. An einer Welle 4 der Luftklappe 2 ist der Anschlag 3 unterbrochen und versetzt, weil die Luftklappe 2 in der geschlossenen Stellung von zwei verschiedenen Seiten am Anschlag 3 anliegt. Der Anschlag 3 begrenzt einen Stellweg der das Stellelement bildenden Luftklappe 2 in der Schließrichtung, der Anschlag 3 kann deswegen auch als Begrenzung des Stellwegs der Luftklappe 2 bezeichnet werden. Außer der Luftklappe 2 weist die erfindungsgemäße mechanische Stellvorrichtung zwei miteinander kämmende Zahnräder 5, 6 auf, die auf einer Außenseite einer Seitenwand des Luftkanals 1 angeordnet sind. In der Zeichnung ist die Seitenwand des Luftkanals 1 weggeschnitten, damit die Luftklappe 2 und ihr Anschlag 3 sichtbar sind. Eines der beiden Zahnräder 5 ist drehfest auf der Welle 4 der Luftklappe 2 angeordnet. Das andere Zahnrad 6 ist auf einem Wellenstummel 20 drehbar gelagert, der von der Seitenwand des Luftkanals 1 absteht, die in der Zeichnung weggeschnitten ist. Die Zahnräder 5, 6 sind Stirnzahnräder, sie weisen beide Verzahnungssegmente 7, 8 auf, die sich über einen Umfangsabschnitt von etwas mehr als 90° erstrecken. Die nachfolgend als Verzahnungen 7, 8 bezeichneten Verzahnungssegmente 7, 8 der Zahnräder 5, 6 erstrecken sich also nicht über den gesamten Umfang, was allerdings durch die Erfindung nicht ausgeschlossen ist. Die Verzahnungen 7, 8 beider Zahnräder 5, 6 sind an jeweils beiden Enden über radiale Speichen 9, 10 einstückig mit den Zahnrädern 5, 6. Unterhalb von Zahnfüßen der Verzahnungen 7, 8 erstrecken sich Ausnehmungen in Form von Langlöchern 11, 12 in Umfangsrichtung der Zahnräder 5, 6. Auf diese Weise sind die Verzahnungen 7, 8 in radialer Richtung, also in Zahnhöhenrichtung, federnd.

An einem Ende weist eine Verzahnung 8 eine Zahngrunderhöhung 13 auf. Das bedeutet wie in Figur 3 durch eine Strichpunktkreislinie zu sehen, dass der Zahngrund an der genannten Stelle einen größeren Radius als die Zahngründe zwischen den übrigen Zähnen der Verzahnung 8 aufweist. Die Zahngrunderhöhung 13 bewirkt, dass ein korrespondierender Zahn 14 des anderen Zahnrads 5 mit seinem Zahnkopf gegen den erhöhten Zahngrund 13 stößt. Aufgrund der federnden Verzahnungen 7, 8 wird das Stoßen des Zahns 14 gegen den erhöhten Zahngrund 13 ausgeglichen. Die Zahngrunderhöhung 13 bewirkt einen Druckpunkt, der durch Drehen der beiden kämmenden Zahnräder 5, 6 in beiden Richtungen überwunden werden kann. Der Druckpunkt ist so angeordnet, dass er beim Stellen der Luftklappe 2 in Schließrichtung kurz vor Erreichen der geschlossenen Stellung überwunden wird. Der Druckpunkt übt in der Schließstellung ein Moment aus, das die Luftklappe 2 mit Vorspannung gegen die Anlage 3 drückt, die eine Begrenzung des Stellwegs in der Schließrichtung bildet.

Aufgrund ihrer federnden Ausbildungen federn die Verzahnungen 7, 8 nicht nur wie gewünscht in radialer-, d. h. in Zahnhöhenrichtung, sondern ungewünscht auch in Umfangsrichtung. Jedenfalls besteht die Möglichkeit einer Elastizität der Verzahnungen 7, 8 in Umfangsrichtung, eine Torsionssteifigkeit der Zahnräder 5, 6 ist verringert. Deswegen weist eines der beiden Zahnräder 5 eine Versteifung gegen eine Verschiebung seiner Verzahnung 7 in Umfangsrichtung auf. Im Ausführungsbeispiel ist die Versteifung ein stangenförmiges Versteifungselement 15, das in einer Sehnenrichtung des Zahnrads 5 verlaufend angeordnet ist. Das Versteifungselement 15 verbindet die Verzahnung 7 mit einer Radscheibe 16 des Zahnrads 5, die drehfest mit der Welle 4 ist. Das Versteifungselement 15 überbrückt das Langloch 11, das die Ausnehmung des Zahnrads 5 bildet. Das Versteigungselement 15 beginnt im Bereich eines Zahnfußes des Zahnes 14 der Verzahnung 7, der mit dem erhöhten Zahngrund 13 der Verzahnung 8 des anderen Zahnrads 6 zusammenwirkt und den überwindbaren Druckpunkt bewirkt. Vom genannten Zahnfuß erstreckt sich das Versteifungselement 15 in der Richtung, die die Vorspannung bewirkt, mit der die das Stellelement bildende Luftklappe 2 in der geschlossenen Stellung am Anschlag 3 anliegt. Das Versteifungselement 15 kann auch als Speiche des Zahnrads 5 aufgefasst werden, die in einer Sehnenrichtung angeordnet ist. Wie dargelegt, stützt das Versteifungselement 15 die Verzahnung 7 gegen eine Verschiebung in Umfangsrichtung, und zwar in der Schließrichtung ab, wodurch die Vorspannung, mit der die Luftklappe 2 in der geschlossenen Stellung am Anschlag 3 anliegt, erhöht ist. Durch die höhere Vorspannung wird eine gute Schließwirkung der Luftklappe 2 erzielt. Ein Luftspalt zwischen der geschlossenen Luftklappe 2 und dem Anschlag 3 durch zu geringe oder fehlende Vorspannung wird vermieden. Außerdem werden Klappergeräusche der geschlossenen Luftklappe 2 vermieden. Eine Versteifung der Verzahnung 8 gegen Verschiebung in Umfangsrichtung kann grundsätzlich auch am anderen Zahnrad 6 oder an beiden Zahnrädern 5, 6 vorgesehen sein.

Das andere Zahnrad 6 weist ein Bedienrad 17 auf. Das Bedienrad 17 ist drehfest mit dem Zahnrad 6, es erstreckt sich über einen Teil des Umfangs, in dem sich das Verzahnung 8 nicht befindet. Das Bedienrad 17 weist eine Riffelung 18 als Grifffläche an seinem Umfang auf.

## Patentansprüche

1. Mechanische Stellvorrichtung zum Stellen (Bewegen) eines Stellelements (2), dessen Stellweg zumindest in einer Richtung eine Begrenzung (3) aufweist, mit zwei kämmenden Zahnrädern (5, 6), die einen überwindbaren Druckpunkt durch eine Erhöhung der Verzahnung (13) eines der beiden Zahnräder (6) unmittelbar vor Erreichen der Begrenzung (3) des Stellelements (2) aufweist, so dass das Stellelement (2) mit Vorspannung an der Begrenzung (3) anliegt, wobei die Verzahnung (7, 8) eines der beiden Zahnräder (5, 6) zum Ausgleich der Erhöhung der Verzahnung (13) dieses oder des anderen Zahnrads (5) in Zahnhöhenrichtung federnd ist, **dadurch gekennzeichnet, dass** die federnde Verzahnung (7) eine Versteifung (15) gegen eine Verschiebung der Verzahnung (7) in Umfangsrichtung des Zahnrads (5) im Bereich des Druckpunkts aufweist.

2. Mechanische Stellvorrichtung nach Anspruch 1, **dadurch gekennzeichnet, dass** mindestens eines der beiden Zahnräder (5, 6) Verzahnungssegmente (7, 8) aufweist.

3. Mechanische Stellvorrichtung nach Anspruch 1, **dadurch gekennzeichnet, dass** das Zahnrad (5, 6) mit der federnden Verzahnung (7, 8) eine Ausnehmung (11, 12) unterhalb der Zahnfüße seiner Verzahnung (7, 8) aufweist und dass die Versteifung (15) die Ausnehmung (11) ausgehend vom Bereich des Druckpunkts in einer Sehnenrichtung überbrückt.

4. Mechanische Stellvorrichtung nach Anspruch 3, **dadurch gekennzeichnet, dass** die Versteifung ein stangenförmiges, in einer Sehnenrichtung des Zahnrads (5) verlaufendes Versteifungselement (15) aufweist.

5. Mechanische Stellvorrichtung nach Anspruch 3, **dadurch gekennzeichnet, dass** die Ausnehmung (11, 12) sich in einer Umfangsrichtung des Zahnrads (5, 6) erstreckt.

6. Mechanische Stellvorrichtung nach Anspruch 1, **dadurch gekennzeichnet, dass** ein Zahnrad (5) eine Zahngrunderhöhung (13) als Erhöhung der Verzahnung aufweist.

7. Mechanische Stellvorrichtung nach Anspruch 1, **dadurch gekennzeichnet, dass** ein Zahnrad (6) ein Bedienrad (17) aufweist.

8. Mechanische Stellvorrichtung nach Anspruch 1, **dadurch gekennzeichnet, dass** das Stellelement eine Luftklappe (2) ist.

9. Mechanische Stellvorrichtung nach Anspruch 8, **dadurch gekennzeichnet, dass** die Luftklappe (2) starr mit einem der beiden Zahnräder (5) verbunden ist.
